# EUROPEAN PATENT SPECIFICATION

(11) **EP 3 015 953 B1**
(45) Date of publication and mention of the grant of the patent: **18.12.2019**
(21) Application number: 14191137.0
(22) Date of filing: 30.10.2014
(51) Int. Cl.: G06F 3/01, G06F 3/0481

(54) **Method and system for detecting objects of interest**
Verfahren und System zur Detektion von Objekten von Interesse
Procédé et système pour détecter des objets d'intérêt

(43) Date of publication of application: 04.05.2016
(73) Proprietor: 4tiitoo GmbH, 80331 München (DE)
(72) Inventor: Odörfer, Stephan, 85579 Neubiberg (DE); Meyer, Tore, 80337 Munich (DE)
(74) Representative: Qip Patentanwälte Dr. Kuehn & Partner mbB

(56) References cited:
- EP-A2- 0 665 489
- US-A1- 2008 275 598
- US-A1- 2012 304 063

## Description

### FIELD OF THE INVENTION

The invention relates to a method, a computer program and a computer-readable medium for detecting objects a person has interest in interacting with.

Furthermore, the invention relates to a system for detecting objects.

### BACKGROUND OF THE INVENTION

Usual input devices for inputting data into a computer are keyboard and mouse devices. However, due to the increased importance of mobile devices, other input devices such as touchpads, gesture detecting systems and eye tracking systems become more and more important.

Natural user input devices like 3D cameras, touchpads, gesture detecting systems, eye tracking systems or other sensors, which track user movements (for example, when the user is pointing at the screen with a finger, arm, head, controller or other pointing item or bodypart) may suffer from imprecise pointing due to limitations of the sensors as well as limitations in the pointing itself. For example, objects may be identified by looking at a specific word in a text to select it, by pointing with the finger towards a button on the screen to push it or by pointing with a finger at an object in the real world if the real world environment is tracked in parallel. When using these input devices to identify an object, imprecisions may lead to problems in the selection process that are typically tackled by a prolonged adjustment process based on visual feedback to the user, for example by increasing the size of objects and their spacing in the graphical user interface.

US 2012/304063 A1 relates to a system, for improving object detection, in which the movement of a target object (a hand of a user) is tracked and a virtual pointer (cursor) is used based on the movement of the hand. A button, a user wishes to select, is predicted from a set of controls based on a path of movement associated with the target object. Based on an extension of the path of the target object onto a predicted path, a projection vector is identified along which the virtual pointer traverses.

### DESCRIPTION OF THE INVENTION

It is an object of the invention to increase the speed of selection of an object with a natural user input device. It is a further object of the invention to reduce the needed involvement of a person using the natural user input device.

This object is achieved by the subject-matter of the independent claims. Further exemplary embodiments are evident from the dependent claims and the following description.

An aspect of the invention relates to a method for detecting (for example virtual) objects a person has interest in interacting with, which completely may be performed by a computer. Objects of interests may by images displayed on a screen provided by a computer or may be real world objects, which for example are watched by a person through smart glasses or are pointed at by a person.

According to an embodiment of the invention, the method comprises: receiving data points of a natural user input device adapted for tracking a movement of the person; determining at least one vector from the data points by grouping data points into groups, wherein the data points of a group indicate a user movement in one direction; determining a map of interaction objects, such that data points are assignable to interaction objects; predicting a target area (in the map) from the at least one vector by mapping the at least one determined vector to the map of interaction objects; predicting at least one interaction object in the target area as interaction object of interest.

The data points may be provided in a sequence and/or with a constant sampling rate by a natural user input device, such as a gaze tracking device, a 3D camera or a pointing device. The data points may indicate a current focus point of one or two eyes of the person or may indicate a point the person is pointing to.

An (electronic) map is used for mapping the data points to the objects. For example, the map of objects may comprise the outlines or shapes of the objects.

The map of objects may comprise an outlining rectangle or in general an outlining polygon or outlining shape for each object in the collection of objects. In the case of a graphical user interface displaying the objects, the data points and/or the map may be based on the coordinates of the display device displaying the objects.

Interaction objects may be graphical user interface elements such as buttons, sliders, etc. Interaction objects may be real world objects the person is looking and/or is pointing at. Interaction objects also may be virtual objects that for example are projected in the view of the person.

After the data points have been received, groups of data points indicating a user movement are identified and a vector is determined from these data points. In other words, movement vectors are derived from the data points. The vector may be associated with the user movement. In general, a vector may be a geometrical object having a direction, a length and optionally a starting and/or end point. For example, a vector may be a directed line segment with a starting point.

A group of data points may comprise more than two data points. It may be possible that the vector is determined from three or more data points by minimizing a statistical function. For example, the direction of the vector may be determined with a line, from which the data points have least mean square distance. The starting point and/or the end point of the vector also may be based on the group of data points, for example by projecting the data points to the line.

In the end, a target area is predicted from the one or more determined vector and an interaction object is predicted from the target area. For example, the target area may be an area (such as a rectangle or circle) at the tip of the vector. However, it also may be possible that the target area is distant from the vector, for example, it may be at the crossing point of two lines defined by two vectors. The interaction object may be predicted by intersecting its outlining polygon or shape with the target area. If the target area has intersections with more than one interaction object, a specific probability of user interaction may be assigned to more than one of these interaction objects.

With the method, the selection of objects not only may be based on the current data points generated by the natural user input device but also on previous data points that also may contribute to the prediction of user movement. The prediction of user movement is based on vectors that are determined from the data points received from the natural user input device.

The method may accelerate the selection process of objects with natural user input devices. By creating and analysing vector data across multiple data points received from the natural user input device, the user or person is not required to exactly point to the object the user wants to interact with nor is a close to 100% precision in the detection itself required to map the hit to the object of interest. A probability model derived from the vector data may be used to support the selection process.

The method may allow increasing true positive detection with natural user input device by using vector analysis possibly supported by controlled GUI movements and/or interaction steps (e.g. highlighting of elements).

According to an embodiment of the invention, a probability of user interaction is assigned to an interaction object (for example based on a number of interaction objects in the target area, a vector quality, and/or an alignment of multiple vectors). In other words, every object may have a numeric value indicating a probability of intended user interaction. Based on the determined vectors, these probability values may be set and/or altered. The at least one interaction object is selected, when the probability of user interaction is higher than a threshold value.

This threshold value may be a fixed threshold value or may be a dynamically threshold value. For a dynamical threshold value, the probability values may be sorted and a cutoff may be determined where the curve of ascending or descending values has a steep flank (or the derivative of the curve reaches a specific value). In general, the dynamical threshold may be determined with any type of clustering.

According to an embodiment of the invention, the map of interaction objects is determined in an area of interest derived from the data points and/or vectors determined from the data points. It may be possible that the map and optionally the outlining polygons and/or shapes are not determined in the complete possible area but only in a subarea that is based on the data points and/or vectors, for example because the subarea has been identified as of interest to the user. In the case of vectors, the area of interest also may comprise the target areas predicted from the vectors. In another case, the map may be generated completely independent from data points and/or vectors.

According to an embodiment of the invention, the map of interaction objects is determined from objects of a graphical user interface or from image data (for example generated by a camera). For example, the map may comprise the outlines of buttons, sliders, etc. The map also may be determined with an object recognition algorithm from image and/or video data.

According to an embodiment of the invention, at least one of a direction, a length, a speed, an acceleration, and a deceleration are determined for a vector. For example, when the data points have a constant sampling rate, the speed may be dependent on a distance of data points of a vector. When the distances of consecutive data points of a vector decrease (increase), a change of the distances may be used for calculating an acceleration (deceleration) associated with the vector.

According to an embodiment of the invention, the target area of a vector is determined from at least one of a direction, a length, a speed, an acceleration, and a deceleration of the vector. For example, speed and deceleration may be used for determining a target point, where a user movement will stop. The target area may be an area around this target point.

According to an embodiment of the invention, during the determination of a vector, a sequence of data points is grouped into a group. For example, two or more consecutive data points may be used for determining a vector. In particular, data points are grouped into a group, when a statistical value reaches a local extremum (minimum or maximum) and/or a specific value (such as zero), the statistical value indicating a deviation of the data points of the group from a line representing the vector. For example, the sequence of data points may be partitioned into groups of consecutive data points, such that the statistical value (such as least mean square) is minimal for the partitioning.

According to an embodiment of the invention, multiple vectors are determined from overlapping groups of data points and these multiple vectors are used for determining the target area. In other words, two overlapping groups of data points may share data points, i.e. one data point may be part of more than one group. In such a case, the multiple vectors may give rise to multiple target points (for example based on different speeds, accelerations, decelerations, etc. of the vectors), which may be used for identifying a target area (for example, the target points may outline the target area).

According to an embodiment of the invention, the method further comprises: displaying the interaction objects in a display device and/or providing a visual feedback for the at least one predicted interaction object to accentuate the at least one predicted interaction object. An interaction object may be more accentuated, when the graphical layout of the object or the graphical relationship between the object and surrounding objects changes in such a way, that a user receives an impulse to gaze at the object. For example, a visual feedback may be placed on the at least one predicted interaction object. A visual feedback may be a point, small circle or other object graphically overlaying and/or changing the predicted interaction object (such as highlighting). The visual feedback may help to compare a user reaction with the predicated user selection.

According to an embodiment of the invention, the method further comprises: providing a visual feedback for the at least one predicted interaction object to accentuate the at least one predicted interaction object, and determining a correction offset by comparing the position of the visual feedback with received data points after the placement of the visual feedback. It has to be noted that in this case, the predicted interaction object may be predicted with another method as described above. For example, the interaction object may be predicted with a fixation point determined from the data points. In any case, the data points received (shortly) after the display of the visual feedback indicate the (real) position of the visual feedback, since it may be assumed that the user or person is looking directly to the visual feedback, when it appears. For example, with a fixation point determined from the data points received after the placement of the visual feedback, a correction offset may be determined, which may be a difference between the fixation point and a center of the visual feedback.

According to an embodiment of the invention, the method further comprises: determining a new and/or further target area from a vector determined from data points generated from the user interaction directly after the placement of the visual feedback, and determining a correction offset by comparing the position of the visual feedback (on the map of interaction objects) with the new, further target area. In other words, the correction offset also may be determined from vectors, which have been determined from data points received directly after the placement of the visual feedback.

According to an embodiment of the invention, the method further comprises: animating at least one interaction object with respect to a specific direction; associating an animated interaction object to a vector determined from the data points, when a direction of the vector matches the specific direction of the animated interaction object; and predicting an interaction object based on an association to a vector and/or increasing a probability of user interaction for an interaction object, which has an association to a vector. Animations may be used for associating vectors to specific objects. For example, when an object is moving in a specific direction (for example left and right) and the person is following this object, the resulting vectors also may be aligned with respect to this direction. In this case, it may be assumed, that the person intends to select the moving object.

According to an embodiment of the invention, data points for a past timeframe are gathered and are evaluated, when a secondary user input is received, which indicates that the person intends to execute a user action. The data points may be gathered for a moving window over a past timeframe (for example for the past second). The method as described in the above and in the following may then evaluate the data points of the past timeframe, when the secondary user input is received. A secondary user input may be the click of a button or a click of a keyboard key. The secondary user input may be received from a device different from the natural user input device.

According to an embodiment of the invention, each data point comprises two coordinates or three coordinates. For example, screen coordinates may be two-dimensional. Three-dimensional coordinates may be provided for real world objects, which, for example, are monitored by a 3D camera. In the latter case, the map, the vectors and/or the target area may be based on three-dimensional coordinates.

According to an embodiment of the invention, the data points are sampled with a constant sampling rate and/or the data points are associated with a timestamp of their sample time. It may be possible to derive a speed, acceleration and/or deceleration directly from the data points.

According to an embodiment of the invention, the user movement is at least one of: eye movement, head movement, arm movement, and finger movement. The natural user input device is a gaze detection device, a 2D camera, a 3D camera, or an acceleration and/or position detection device attachable to the person.

Further aspects of the invention relate to a computer program for detecting objects, which, when being executed by a processor, is adapted to carry out the steps of the method as described in the above and in the following, and to a computer-readable medium, in which such a computer program is stored.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a system for detecting objects a person has interest in interacting with, wherein the system comprises a natural user input device adapted for tracking a movement of a person and an object detection device adapted for performing the method as described in the above and in the following. The object detection device may be a computer with a processor that executes the computer program as mentioned above.

It has to be understood that features of the method, the computer program and the computer-readable medium as described in the above and in the following may be features of the system as described in the above and in the following, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a system with a natural user input device according to an embodiment of the invention.
Fig. 2 shows a system with a natural user input device according to a further embodiment of the invention.
Fig. 3 shows a flow diagram for a method for detecting of objects according to an embodiment of the invention.
Fig. 4, 5, 6 and 7 schematically show maps of objects with data points and vectors used in the method of Fig. 3.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

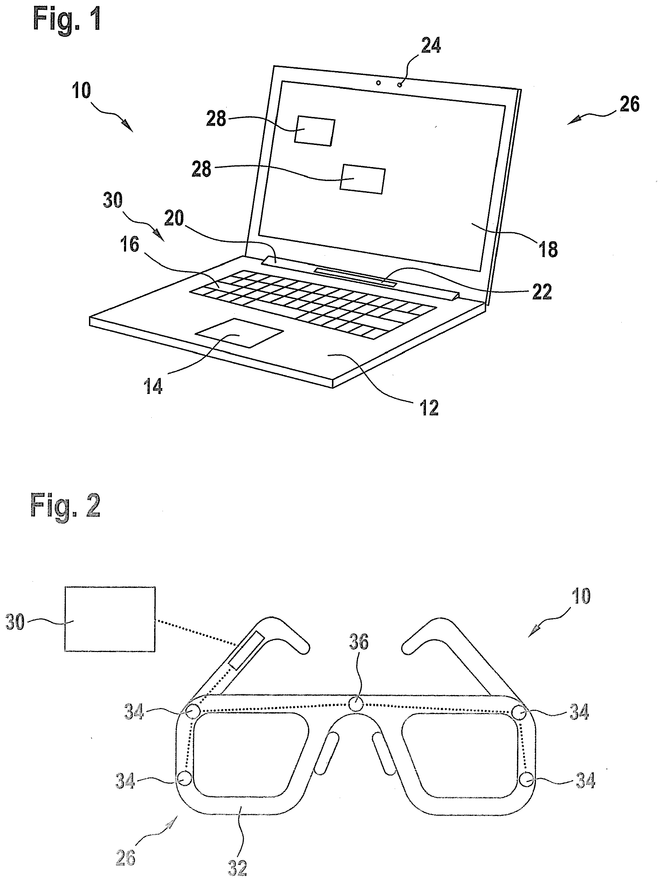

Fig. 1 shows a system 10 for detecting objects in the form of a laptop, which comprises a housing 12, a track pad 14 and a keyboard 16 attached to the housing 12, and a screen or display device 18, which is attached to the housing 12 via a hinge 20. On the hinge 20, a remote gaze tracker 22, for example comprising an infrared light source and corresponding sensors (a camera), is provided. Furthermore, a 3D camera 24 is provided above the screen 18.

With the remote gaze tracker 22, the laptop may be used as a gaze tracking device or more general as natural user input device 26. Infrared light from the gaze tracker 22 is shone at the user and reflections from the eyeballs are recorded with an internal camera of the gaze tracker 22. From the recorded data of the infrared camera, the laptop 10 then predicts where the eyes are looking. In particular, the laptop 10 generates gaze tracking data, which may be provided to software components running in the laptop. The gaze tracking data may be provided in the form of data points.

With the 3D camera 24, the laptop may be used as a motion tracking device or more general as natural user input device 26. The camera 24 generates camera data from a person or user in front of the display device 18. Software running in the laptop may evaluate this camera data to detect gestures and/or head movements of the user. For example, from these gestures, the laptop may generate motion data of the user, which may be provided in the form of data points. For example, the data points may indicate where the user is pointing with his finger.

As will be explained in more detail below, the laptop 10 may display objects 28 and may use the data points to detect, which object 28 is interesting for the user. In this sense, the laptop 10 may be seen as an object detection device 30.

Fig. 2 shows a further type of object detection system 10 comprising glasses 32 as natural user input device 26 and an object detection device 30, which may be a PC, laptop or smartphone that is communicatively interconnected with the glasses 32. The glasses 32 comprise sensors or cameras 34 for recording the eyes of a wearer of the glasses 32. The glasses 32 or the object detection device 30 may generate gaze tracking data from the recorded data of the sensors 34, which may be provided in the form of data points that may be received by the object detection device 30.

The glasses 32 furthermore may comprise a camera 36 for recording the field of view of the wearer. With the camera data of the camera 36, the object detection device 30 may detect objects the person is looking at (for example by finding outlines or shapes in the camera data) and may detect, which objects are interesting for the wearer. Furthermore, the camera data of the camera 36 also may be used for detecting motions and/or gestures of the user analogously as with the camera 24 of Fig. 1.

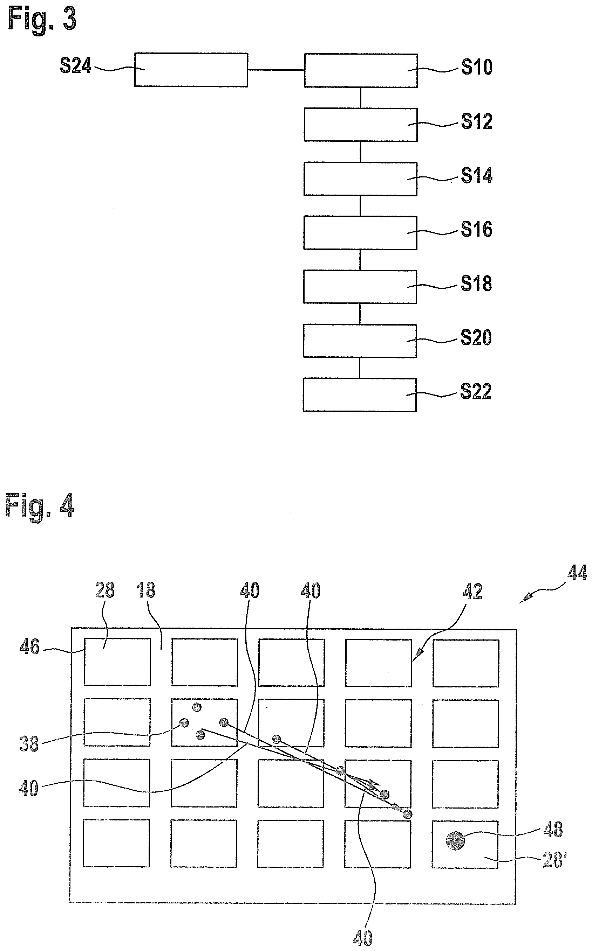

Fig. 3 shows a method for detecting objects, which may be performed by the object detection device/module 30 of Fig. 1 or Fig. 2.

In step S10, data points 38 of the natural user input device 26 are received. Fig. 4 shows examples of such data points 38. The data points 38 may be sampled with a constant or variable sampling rate and/or may comprise two coordinates that may be mapped to the coordinates of the display 18.

It may be possible that data points 38 for a specific past timeframe (for example between 1 and 500 milliseconds) are gathered and are evaluated, when a secondary user input is received, which indicates that the person intends to execute a user action. The data points 38 may be kept in a revolving backlog if interaction intention and GUI response cannot be determined beforehand. For example, in gaze interaction, the selection of an object 28 is typically triggered by a secondary input like pressing a key. Rather than taking a gaze hit or a fixation point at this point in time directly, the data points 38 of the past timeframe are analysed.

As an example, the laptop of Fig. 1 or the glasses of Fig. 2 may comprise a microphone, which may be used as input device for secondary user input. In this case, the secondary user input may be speech commands.

In step S12, at least one vector 40 is determined from the data points 38. Fig. 4 shows examples for vectors 40, each of which is determined from a group 42 of two data points 38.

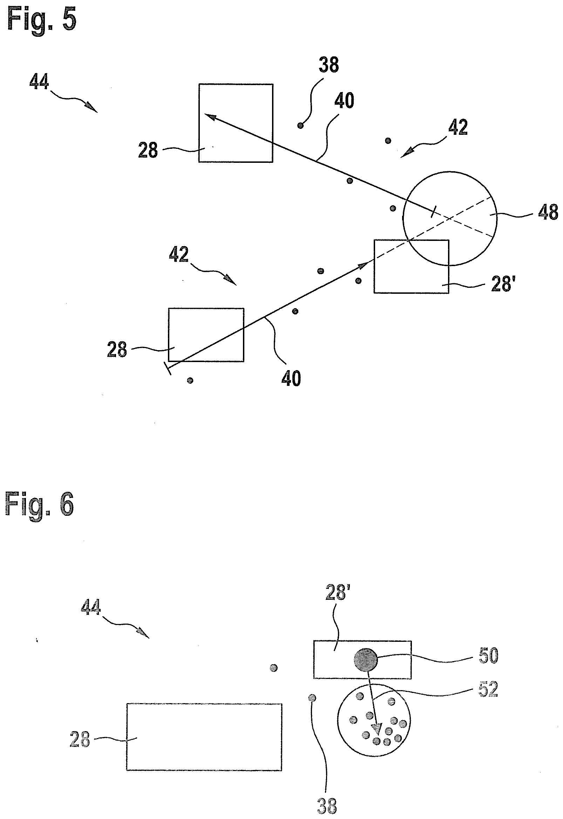

As may be seen from Fig. 4 or Fig. 5, the vectors 40 are associated to a user movement. For example, in Fig. 4, the data points 38 may be the result of a user viewing from the left upper corner to the right bottom corner of the display device 18.

In general, as shown in Fig. 5, data points 38 are grouped into groups 42, wherein the data points 38 of a group 42 indicate a user movement in one direction. During the determination of a vector 40, a sequence of data points 38 may be grouped into a group 42, wherein data points 38 are grouped into a group 42, when a statistical value reaches a local minimum, the statistical value indicating a deviation of the data points 38 of the group 42 from a line representing the vector. For example, algorithms like least square may be used to determine vectors 30 in the data points. As an example, the data points 38 of Fig. 4 have been grouped into two groups 42, which result in two vectors 40 such that the data points 38 of each group 42 have minimal distance to the respective vector 42.

Not only single vectors but multiple vectors 40 may be calculated simultaneously for different groups 42 of data points 38. When the data points 38 are grouped in sequences, these vectors 40 also may be associated with different time periods.

As indicated in Fig. 4, it also may be possible that multiple vectors 40 are determined from overlapping groups 42 of data points 38. These multiple vectors 40 may be nearly parallel or may point at nearly the same intersection point and therefore may be used for determining a target area by using averaging or by using statistical method.

In step S14, a map 44 of interaction objects 28 is determined, such that data points 38 are mapable to interaction objects 28. Fig. 4 shows an example of such a map 44. The map 44 may be seen as a model of objects 28 in a GUI or in real world. The map 44 may be determined from objects of a graphical user interface or from image data.

The map 44 may be determined in the field of view of the person. The map 44 indicates, at which position an object 28 is arranged. Each object 28 may have a map area or outline 46 in the map 44. In the case of Fig. 4, the map area 44 are equally sized rectangles. For example, the objects 28 may be equally sized images and the map area 44 may be the outer border of these images.

When the objects 28 have a more complicated form (for example, when the objects are part of an image or are images of real world objects), also outlines 46 may be determined for the objects 28 and the map 44 of objects may be generated from these outlines 46.

In the case, that the objects are real world objects (for example in the case of Fig. 2) and/or are not displayed by the system 10 itself, the map 44 of objects 28 may be generated from image data received from the camera 36. For example, an object recognition algorithm may be applied to the camera data and outlines of these objects are used for generating the map 44.

It may be possible that the map 44 of interaction objects 28 is determined in an area of interest derived from the data points 38 and/or vectors 40 determined from the data points 38. For example, the area of interest only may comprise those objects that have a map area overlapping with the data points 38 and/or the vectors 40.

In step S16, a target area 48 is predicted from the at least one vector 40 by mapping the at least one determined vector 40 to the map 44. For example, the target area 48 may be on a line defined by the direction of the vector 40 and/or may have a distance from a base of the vector that depends on further parameters.

The direction of a vector 40 may be determined from a line determined from the data points 38 of a group 42 associated with the vector 40. For example, the line may be based on a least mean square method.

Based on the data points 38 from the group 42 associated with the vector 40, a base and a tip of the vector may be determined. For example, these points may be determined by projecting the data points 38 to the line. In this way, also a length of the vector 40 may be determined.

As shown in Fig. 5, the target area 48 may be determined from a crossing point of different vectors 40.

With a constant sampling rate or with timestamps of the data point 38, a speed, an acceleration, and a deceleration may be determined for a vector 40 and the target area 48 may be determined from at least one of a speed, an acceleration, and a deceleration of the vector 40.

It also may be possible that multiple vectors 40 are used for determining the target area 48. For example, the target area 48 of Fig. 4 may be based on a statistical evaluation of the vectors 40.

Based on the target area 48, a probability of user interaction may be assigned to an interaction object 28. For example, the object 28' of Fig. 4 or 5, which map area intersects the target area 48, may be assigned a higher probability than other objects 28, which, for example, have a distance lower than a threshold value from the target area 48. As further example, the probability of user interaction may be determined based on the amount of objects 28 in the target area 48 of the vector 40 and/or the quality of the vector 40. If least mean squares are used, the sum of the squares may indicate a quality of a vector. A quality of a vector 40 also may be based on an alignment of multiple vectors 40, if multiple vectors are used.

In step S18, at least one interaction object 18' in or at the target area 48 is predicted as interaction object of interest. For example, the interaction object 28' may be the object with the highest overlap with the target area 48.

It also may be possible that the at least one interaction object 28' is selected, when the probability of user interaction is higher than a threshold value. Here, the threshold or cutoff value for the probability may dynamically be adjusted based on algorithms that detect clusters or steep drops in the curves of ordered probability values over all objects 28.

In step S20, a visual feedback 50 is placed on a predicted interaction object 28'. Fig. 6 shows an example of a visual feedback 50 in the form of a filled circle on the object 28'. However, the visual feedback 50 may be any kind of object that may be projected into the object 28'.

In step S22, a correction offset 52 is determined by comparing the position of the visual feedback 50 with received data points 38 after the placement of the visual feedback 50. For example, as shown in Fig. 5, the data points 38 received after the placement of the visual feedback 50 may have a cumulation point or cumulation area 54, which is different from the position of the visual feedback 50. In this way, a response of the user to the visual feedback 50 may be monitored to allow further refinement of the selection in case the prognosis of the targeted object 28' was wrong.

For example, in a gaze detection system, a highlighting of an assumed selected object 28' may typically trigger a short focus onto the highlight. If the right object was highlighted, the movement will be smaller than the size of the object. If the wrong element was selected, a movement of about the distance between the highlighted and the targeted object will happen. Inverting this vector 52, the targeted object may be highlighted despite of big deviations or offset in the gaze calibration.

In a gesture or motion detection system, the user typically assumes, that the highlighted object is the one he points at and with a short delay adjusts the movement to move from the highlighted object to the targeted object. This new vector may be used for a prognosis as in steps and following, but this time with a clear understanding of the starting point of the vector.

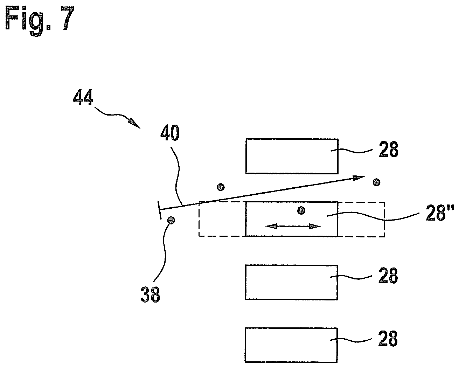

In step S24, at least one interaction object 28" is animated with respect to a specific direction. As shown in Fig. 7, the object 28" may be moved reciprocally in a specific direction. If a user tries to focus the object 28", the data points 38 usually will follow this movement. A vector 40 determined from these data points 38 may be aligned with the direction of movement. The animated interaction object 28" may then be associated with the vector 40, when a direction of the vector 40 matches the specific direction of the animated interaction object 28", for example after compensating for imprecisions, offsets and/or assumptions about movement behaviour. In this case, the prediction of the interaction object 28 (as described in steps S10 to S18) may be based on an existing association with respect to a vector 40. It also may be possible to increase the value for a probability of user interaction for an animated interaction object 28", when it has an association to a vector 40.

In general, a graphical user interface (GUI) may be designed for such vector based analyses by animating selectable objects 28 in the GUI. For example, several objects located in vicinity of the focus point may move slowly in different directions. There also may be patterns for moving selectable objects 28 on a different vector over given periods of time. The user's tendency to follow the object 28 usually results in vector patterns in the data points 38 that may be matched to the movements of the objects 28 at that point in time.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: object detection system
- 12: housing
- 14: track pad
- 16: keyboard
- 18: display device
- 20: hinge
- 22: gaze tracker
- 24: 3D camera
- 26: natural user input device
- 28: interaction object
- 30: object detection device
- 32: head mounted eye tracking system
- 34: eye tracking sensor
- 36: camera
- 38: data point
- 40: vector
- 42: group of data points
- 44: map
- 46: outline
- 48: target area
- 50: visual feedback
- 52: correction offset

## Claims

1. A method for detecting objects (28) a person has interest in interacting with, the method comprising:
receiving data points (38) of a natural user input device (26) adapted for tracking a movement of the person;
determining multiple vectors (40) from the data points (38) by grouping data points (38) into groups (42), wherein the multiple vectors (40) are determined from overlapping groups (42) of data points (38), wherein a data point (38) is part of more than one group (42), wherein the data points (38) of a group (42) indicate a user movement in one direction and wherein data points (38) are grouped into a group (42), when a statistical value reaches a local extremum and/or a specific value, the statistical value indicating a deviation of the data points (38) of the group (42) from a line representing the at least one vector (40);
determining a map (44) of interaction objects (28), such that data points (38) are mapable to interaction objects (28);
predicting a target area (48) from the multiple vectors (40) by mapping the determined multiple vectors (40) to the map (44) of interaction objects (28), wherein the multiple vectors (40) give rise to multiple target points, which are used for identifying the target area (48);
predicting at least one interaction object (28') at the target area (48) as interaction object of interest.

2. The method of claim 1,
wherein a probability of user interaction is assigned to the at least one interaction object (28);
wherein the at least one interaction object (28') is selected, when the probability of user interaction is higher than a threshold value.

3. The method of claim 1 or 2,
wherein the map (44) of interaction objects (28) is determined in an area of interest derived from the data points (38) and/or vectors (40) determined from the data points (38); and/or
wherein the map (44) of interaction objects (28) is determined from objects of a graphical user interface or from image data.

4. The method of one of the preceding claims,
wherein at least one of a direction, a length, a speed, an acceleration, and a deceleration are determined for a vector (40); and/or
wherein the target area (48) of a vector (40) is determined from at least one of a direction, a length, a speed, an acceleration, and a deceleration of the vector (40).

5. The method of one of the preceding claims,
wherein, during the determination of a vector (40), a sequence of data points (38) is grouped into a group (42).

6. The method of one of the preceding claims, further comprising:
displaying the interaction objects (28) in a display device (18); and
providing a visual feedback (50) for the at least one predicted interaction object (28') to accentuate the at least one predicted interaction object (28').

7. The method of one of the preceding claims, further comprising:
providing a visual feedback (50) for the at least one predicted interaction object (28') to accentuate the at least one predicted interaction object (28');
determining a correction offset (52) by comparing the visual feedback (50) with received data points (38) after the placement of the visual feedback (50).

8. The method of one of the preceding claims, further comprising:
animating at least one interaction object (28") with respect to a specific direction;
associating an animated interaction object (28") to a vector (40) determined from the data points (38), when a direction of the vector (40) matches the specific direction of the animated interaction object (28");
predicting an interaction object (28) based on an association to a vector (40) and/or increasing a probability of user interaction for an interaction object (40), which has an association to a vector (40).

9. The method of one of the preceding claims,
wherein data points (38) for a past timeframe are gathered and are evaluated, when a secondary user input is received, which indicates that the person intends to execute a user action.

10. The method of one of the preceding claims,
wherein each data point (38) comprises two or three coordinates; and/or
wherein the data points (38) are sampled with a constant sampling rate; and/or
wherein the data points (38) are associated with a timestamp of their sample time.

11. The method of one of the preceding claims,
wherein the user movement is at least one of: eye movement, head movement, arm movement, and finger movement; and/or
wherein the natural user input device (26) is a gaze detection device, a 2D camera, a 3D camera, a pointing device or an acceleration and/or position detection device attachable to the person.

12. A computer program for detecting objects, which, when being executed by a processor, causes the processor to carry out the steps of the method of one of the preceding claims.

13. A computer-readable medium, in which a computer program according to claim 12 is stored.

14. A system (10) for detecting objects (28) a person has interest in interacting with, the system comprising:
a natural user input device (26) adapted for tracking a movement of a person;
an object detection device (30) configured for performing the method of one of claims 1 to 11.

## Patentansprüche

1. Verfahren zum Detektieren von Objekten (28), mit denen eine Person zu interagieren wünscht, wobei das Verfahren Folgendes umfasst:
Empfangen von Datenpunkten (38) einer Natürlichen-Nutzereingabe-Vorrichtung (26), die dafür ausgelegt ist, eine Bewegung der Person zu verfolgen;
Bestimmen mehrerer Vektoren (40) anhand der Datenpunkte (38) durch Gruppieren von Datenpunkten (38) in Gruppen (42), wobei die mehreren Vektoren (40) anhand überlappender Gruppen (42) von Datenpunkten (38) bestimmt werden, wobei ein Datenpunkt (38) Teil von mehr als einer Gruppe (42) ist, wobei die Datenpunkte (38) einer Gruppe (42) eine Nutzerbewegung in einer Richtung anzeigen, und
wobei Datenpunkte (38) in einer Gruppe (42) gruppiert werden, wenn ein statistischer Wert ein lokales Extrem und/oder einen speziellen Wert erreicht, wobei der statistische Wert eine Abweichung der Datenpunkte (38) der Gruppe (42) von einer Linie anzeigt, die den mindestens einen Vektor (40) repräsentiert;
Bestimmen einer Karte (44) von Interaktionsobjekten (28), dergestalt, dass Datenpunkte (38) auf Interaktionsobjekte (28) abgebildet werden können;
Vorhersagen eines Zielbereichs (48) anhand der mehreren Vektoren (40) durch Abbilden der bestimmten mehreren Vektoren (40) auf die Karte (44) von Interaktionsobjekten (28),
wobei die mehreren Vektoren (40) zu mehreren Zielpunkten führen, die zum Identifizieren des Zielbereichs (48) verwendet werden;
Vorhersagen mindestens eines Interaktionsobjekts (28') in dem Zielbereich (48) als interessierendes Interaktionsobjekt.

2. Verfahren nach Anspruch 1,
wobei dem mindestens einen Interaktionsobjekt (28) eine Wahrscheinlichkeit einer Nutzerinteraktion zugewiesen wird; wobei das mindestens eine Interaktionsobjekt (28') ausgewählt wird, wenn die Wahrscheinlichkeit einer Nutzerinteraktion höher ist als ein Schwellenwert.

3. Verfahren nach Anspruch 1 oder 2,
wobei die Karte (44) von Interaktionsobjekten (28) in einem interessierenden Bereich bestimmt wird, der von den Datenpunkten (38) und/oder Vektoren (40) abgeleitet wird, die anhand der Datenpunkte (38) bestimmt werden; und/oder wobei die Karte (44) von Interaktionsobjekten (28) anhand von Objekten einer grafischen Benutzerschnittstelle oder von Bilddaten bestimmt wird.

4. Verfahren nach einem der vorangehenden Ansprüche,
wobei mindestens eines von einer Richtung, einer Länge, einer Geschwindigkeit, einer Beschleunigung und einer Verlangsamung für einen Vektor (40) bestimmt wird; und/oder wobei der Zielbereich (48) eines Vektors (40) anhand von mindestens einem von einer Richtung, einer Länge, einer Geschwindigkeit, einer Beschleunigung und einer Verlangsamung des Vektors (40) bestimmt wird.

5. Verfahren nach einem der vorangehenden Ansprüche,
wobei, während der Bestimmung eines Vektors (40), eine Sequenz von Datenpunkten (38) in einer Gruppe (42) gruppiert wird.

6. Verfahren nach einem der vorangehenden Ansprüche, des Weiteren umfassend:
Anzeigen der Interaktionsobjekte (28) in einer Anzeigevorrichtung (18); und
Bereitstellen einer visuellen Rückkopplung (50) für das mindestens eine vorhergesagte Interaktionsobjekts (28'), um das mindestens eine vorhergesagte Interaktionsobjekt (28') zu akzentuieren.

7. Verfahren nach einem der vorangehenden Ansprüche, des Weiteren umfassend:
Bereitstellen einer visuellen Rückkopplung (50) für das mindestens eine vorhergesagte Interaktionsobjekts (28'), um das mindestens eine vorhergesagte Interaktionsobjekt (28') zu akzentuieren;
Bestimmen eines Korrekturversatzes (52) durch Vergleichen der visuellen Rückkopplung (50) mit empfangenen Datenpunkten (38) nach dem Platzieren der visuellen Rückkopplung (50).

8. Verfahren nach einem der vorangehenden Ansprüche, des Weiteren umfassend:
Animieren mindestens eines Interaktionsobjekts (28") mit Bezug auf eine spezielle Richtung;
Verknüpfen eines animierten Interaktionsobjekts (28") mit einem Vektor (40), der anhand der Datenpunkte (38) bestimmt wurde, wenn eine Richtung des Vektors (40) mit der speziellen Richtung des animierten Interaktionsobjekts (28") übereinstimmt;
Vorhersagen eines Interaktionsobjekts (28) auf der Basis einer Verknüpfung mit einem Vektor (40) und/oder der Zunahme einer Wahrscheinlichkeit einer Nutzerinteraktion für ein Interaktionsobjekt (40), das eine Verknüpfung mit einem Vektor (40) hat.

9. Verfahren nach einem der vorangehenden Ansprüche,
wobei Datenpunkte (38) für einen vergangenen Zeitframe erfasst werden und ausgewertet werden, wenn eine sekundäre Nutzereingabe empfangen wird, die anzeigt, dass die Person beabsichtigt, auszuführen eine Nutzeraktion.

10. Verfahren nach einem der vorangehenden Ansprüche,
wobei jeder Datenpunkt (38) zwei oder drei Koordinaten umfasst; und/oder
wobei die Datenpunkte (38) mit einer konstanten Abtastrate abgetastet werden; und/oder
wobei die Datenpunkte (38) mit einem Zeitstempel ihrer Abtastzeit verknüpft sind.

11. Verfahren nach einem der vorangehenden Ansprüche,
wobei die Nutzerbewegung mindestens eines von Folgendem ist:
Augenbewegung, Kopfbewegung, Armbewegung, und Fingerbewegung; und/oder
wobei die Natürliche-Nutzereingabe-Vorrichtung (26) eine Blickdetektionsvorrichtung, eine 2D-Kamera, eine 3D-Kamera, eine Zeigevorrichtung oder eine Beschleunigungs- und/oder Positionsdetektionsvorrichtung, die an der Person angebracht ist, ist.

12. Computerprogramm zum Detektieren von Objekten, das, wenn es durch einen Prozessor ausgeführt wird, den Prozessor veranlasst, die Schritte des Verfahrens nach einem der vorangehenden Ansprüche auszuführen.

13. Computerlesbares Medium, auf dem ein Computerprogramm nach Anspruch 12 gespeichert ist.

14. System (10) zum Detektieren von Objekten (28), mit denen eine Person zu interagieren wünscht, wobei das System Folgendes umfasst:
eine Natürliche-Nutzereingabe-Vorrichtung (26), die dafür ausgelegt ist, eine Bewegung einer Person zu verfolgen;
eine Objektdetektionsvorrichtung (30), die dafür ausgebildet ist, das Verfahrens nach einem der Ansprüche 1 bis 11 auszuführen.

## Revendications

1. Procédé de détection d'objets (28) avec lesquels une personne a un intérêt à interagir, le procédé comprenant de :
recevoir des points de données (38) d'un dispositif d'entrée d'utilisateur physique (26) conçu pour suivre un mouvement de la personne;
déterminer de multiples vecteurs (40) à partir des points de données (38) en regroupant des points de données (38) en groupes (42), dans lequel les multiples vecteurs (40) sont déterminés à partir des groupes qui se chevauchent (42) de points de données (38), dans lequel un point de données (38) fait partie de plus d'un groupe (42), dans lequel les points de données (38) d'un groupe (42) indiquent un mouvement de l'utilisateur dans une direction et dans lequel des points de données (38) sont regroupés en un groupe (42) lorsqu'une valeur statistique atteint un extremum local et/ou une valeur spécifique, la valeur statistique indiquant un écart des points de données (38) du groupe (42) par rapport à une ligne représentant le au moins un vecteur (40);
déterminer une carte (44) d'objets d'interaction (28), de telle sorte que des points de données (38) peuvent être mappés avec des objets d'interaction (28);
prédire une zone cible (48) à partir des multiples vecteurs en mappant les multiples vecteurs déterminés (40) sur la carte (44) d'objets d'interaction (28), dans lequel les multiples vecteurs (40) donnent lieu à de multiples points cibles, qui sont utilisés pour identifier la zone cible (48) ;
prédire au moins un objet d'interaction (28') au niveau de la zone cible (48) en tant qu'objet d'interaction d'intérêt.

2. Procédé selon la revendication 1,
dans lequel une probabilité d'interaction d'utilisateur est attribuée à l'au moins un objet d'interaction (28);
dans lequel le au moins un objet d'interaction (28') est sélectionné lorsque la probabilité d'interaction d'utilisateur est supérieure à une valeur de seuil.

3. Procédé selon la revendication 1 ou 2,
dans lequel la carte (44) d'objets d'interaction (28) est déterminée dans une zone d'intérêt dérivée des points de données (38) et/ou des vecteurs (40) déterminés à partir des points de données (38); et/ou
dans lequel la carte (44) d'objets d'interaction (28) est déterminée à partir d'objets d'une interface utilisateur graphique ou à partir de données d'image.

4. Procédé selon l'une des revendications précédentes, dans lequel au moins l'une d'une direction, d'une longueur, d'une vitesse, d'une accélération et d'une décélération est déterminée pour un vecteur (40); et/ou
dans lequel la zone cible (48) d'un vecteur (40) est déterminée à partir d'au moins l'une d'une direction, d'une longueur, d'une vitesse, d'une accélération et d'une décélération du vecteur (40).

5. Procédé selon l'une des revendications précédentes,
dans lequel, lors de la détermination d'un vecteur (40), une séquence de points de données (38) est regroupée en un groupe (42).

6. Procédé selon l'une des revendications précédentes, comprenant en outre de :
afficher les objets d'interaction (28) dans un dispositif d'affichage (18) ; et
fournir une rétroaction visuelle (50) pour le au moins un objet d'interaction prédit (28') pour accentuer le au moins un objet d'interaction prédit (28').

7. Procédé selon l'une des revendications précédentes, comprenant en outre de :
fournir une rétroaction visuelle (50) pour le au moins un objet d'interaction prédit (28') pour accentuer le au moins un objet d'interaction prédit (28');
déterminer une correction de décalage (52) en comparant la rétroaction visuelle (50) avec des points de données reçus (38) après le placement de la rétroaction visuelle (50).

8. Procédé selon l'une des revendications précédentes, comprenant en outre de :
animer au moins un objet d'interaction (28") par rapport à une direction spécifique;
associer un objet d'interaction animé (28'') à un vecteur (40) déterminé à partir des points de données (38), quand une direction du vecteur (40) correspond à la direction spécifique de l'objet d'interaction animé (28'') ;
prédire un objet d'interaction (28) sur la base d'une association à un vecteur (40) et/ou augmenter une probabilité d'interaction d'utilisateur pour un objet d'interaction (40), qui présente une association à un vecteur (40).

9. Procédé selon l'une des revendications précédentes,
dans lequel des points de données (38) pour un laps de temps passé sont rassemblés et sont évalués quand une entrée d'utilisateur secondaire est reçue, qui indique que la personne a l'intention d'exécuter une action d'utilisateur.

10. Procédé selon l'une des revendications précédentes,
dans lequel chaque point de données (38) comprend deux ou trois coordonnées; et/ou
dans lequel les points de données (38) sont échantillonnés à une fréquence d'échantillonnage constante; et/ou dans lequel les points de données (38) sont associés à un horodatage de leur temps d'échantillonnage.

11. Procédé selon l'une des revendications précédentes,
dans lequel le mouvement d'utilisateur est au moins l'un parmi : un mouvement des yeux, un mouvement de la tête, un mouvement des bras, et un mouvement des doigts; et/ou dans lequel le dispositif d'entrée d'utilisateur physique (26) est un dispositif de détection du regard, une caméra 2D, une caméra 3D, un dispositif de pointage ou un dispositif de détection de position et/ou d'accélération pouvant être fixé à la personne.

12. Programme d'ordinateur pour la détection d'objets, qui, lorsqu'il est exécuté par un processeur, amène le processeur à exécuter les étapes du procédé selon l'une des revendications précédentes.

13. Support lisible par ordinateur, sur lequel est stocké un programme d'ordinateur selon la revendication 12.

14. Système (10) pour détecter des objets (28) avec lesquels une personne a un intérêt à interagir, le système comprenant :
un dispositif d'entrée d'utilisateur physique (26) conçu pour suivre un mouvement d'une personne;
un dispositif de détection d'objets (30) configuré pour exécuter le procédé selon l'une des revendications 1 à 11.
